# EUROPEAN PATENT APPLICATION

(11) **EP 4 141 528 A1**
(43) Date of publication of application: **01.03.2023**
(21) Application number: 22187579.2
(22) Date of filing: 28.07.2022
(51) Int. Cl.: G02F 1/13357, G02F 1/1333

(54) **BACKLIGHT MODULE AND DISPLAY DEVICE COMPRISING THE SAME**

(30) Priority: 27.08.2021 TR 202113567
(71) Applicant: Arçelik Anonim Sirketi, 34445 Istanbul (TR)
(72) Inventor: GOODSPEED, CHIU, 34445 ISTANBUL (TR); CHEN, LOUIS, 34445 ISTANBUL (TR); LIN, NORMAN, 34445 ISTANBUL (TR); YOLACAN, EREN, 34445 ISTANBUL (TR)

(57) **Abstract**

The present invention relates to a backlight module (1) for a display device, a display device comprising the backlight module, and a method of assembling the backlight module (1) or the display device. The backlight module (1) comprises a back cover (2) comprising a bottom plate (21) and four sidewalls (22), a plurality of light sources (3), a reflector (4) comprising a bottom portion (41) and four side portions (42) rising from four edges of the bottom portion (41), and a mounting structure (5) for mounting a side portion (42) to a sidewall (22).

## Description

### Technical Field

The present invention relates to a backlight module for a display device and a display device comprising the backlight module. The invention also relates to a method of assembling the backlight module or the display device.

### Background of the Invention

Backlight module structures are commonly used in display devices such as LCD televisions. A backlight module typically includes a light source such as LED bars, a diffuser sheet and a reflector sheet placed in a back cover. The reflector sheet helps effective utilization of light source by reflecting light beams emitted from the light source towards a surface where image is formed. Thus, reflectors play a critical role in improving visual quality by enhancing uniformity of brightness. In order to have uniform brightness at edge regions of the image, reflector sheets are folded upwards at side portions, at a certain angle forming an angled flat surface. Alternatively, side portions of reflector sheets can have curved surfaces to further improve uniformity of reflected light. However, during assembly of backlight modules, giving the reflector desired curved shape and placing it in the back cover accurately is a difficult process. Furthermore, any positional shift or deformation of reflector sheet side portions within the back cover also decreases visual quality along lifetime of the product. Therefore, there is need for improving the ease of assembly and mechanical stability of reflector sheets in backlight modules.

In the state of the art Korean Patent Application KR20160016020A discloses a reflector for uniform brightness for an LCD display. The directivity of reflected light is improved by forming an ink pattern in the outer region of reflecting plate, which is simply fixed to the cover at its bottom by LEDs.

### Aim

The aim of the present invention is the realization of a backlight module, an image display device comprising the backlight module, and a method of assembling the backlight module wherein the reflector can be shaped and firmly fixed therein in a practical and cost-effective manner. A related purpose of the present invention is providing a backlight module and a display device comprising the same whose visual quality, and especially uniformity of brightness at edges is improved and maintained for a long time with a simple mounting mechanical structure that does not require additional fixing means.

### Brief Description of the Invention

The backlight module realized in order to attain the aim of the present invention is defined in Claim 1 and the dependent claims thereof. The backlight module is suitable for being used in a display device and comprises: a back cover comprising a bottom plate and four sidewalls; a plurality of light sources mounted in the back cover; a reflector disposed in the back cover, for reflecting light beams emitted from the light sources, wherein the reflector comprises a bottom portion and four side portions rising from four edges of the bottom portion.

In a preferred embodiment, the backlight module further comprises a mounting structure for fixing a side portion to a corresponding sidewall such that the side portion, when fixed to the sidewall by means of the mounting structure, forms a curved reflecting surface. Since the mounting structure fixes a side portion of reflector directly to a sidewall of the back cover, the reflector position and/or the curved form of side portions are less likely to be displaced or deform in transportation and use of the display device. Hence, enhanced brightness uniformity and image quality is less prone to external mechanical effects and thus maintained for a longer time.

According to an embodiment, the mounting structure is arranged to, when the side portion is fixed to the sidewall, apply a force on a middle point of the side portion towards the corresponding sidewall.

The mounting structure preferably comprises a first attachment means on the side portion and a second attachment means for engaging with the first attachment means, disposed on the corresponding sidewall. The first attachment means may be integral to the side portion. The second attachment means may be integral to the sidewall. Accordingly, a side portion can be fixed to a sidewall without using additional fixing members, which allows simplified design, reduced costs, and reduced man-hours in the assembly process.

At least one side portion comprises at least one first attachment means and at least one corresponding sidewall comprises at least one second attachment means. In an embodiment, each one of two opposite side portions comprises at least one first attachment means, and each one of two corresponding opposite sidewalls comprises at least one second attachment means.

According to another aspect of the invention, there is provided a display device comprising a backlight module as described above.

According to another aspect of the invention, there is provided a method of assembling a backlight module or a display device as described above. The method comprises aligning the reflector with the back cover, and fixing a side portion to a corresponding sidewall by pressing a middle point of said side portion towards said corresponding sidewall.

### Brief Description of the Drawings

The backlight module realized in order to attain the aim of the present invention is illustrated in the attached figures, where:
Figure 1 is a top view of a backlight module according to an embodiment of the invention,
Figure 2 is a front sectional view of the backlight module shown in Figure 1,
Figure 3 is a perspective view of the backlight module according to an embodiment of the invention.

### List of Parts

The elements illustrated in the figures are numbered as follows:
1. Backlight module
2. Back cover
   21. Bottom plate
   22. Sidewall
3. Light source
4. Reflector
   41. Bottom portion
   42. Side portion
5. Mounting structure
   51. First attachment means
   52. Second attachment means

### Detailed Description of the Invention

The backlight module (1) comprises: a back cover (2) comprising a bottom plate (21) and four sidewalls (22); a plurality of light sources (3) mounted in the back cover (2); a reflector (4) disposed in the back cover (2), for reflecting light beams emitted from the light sources (3), wherein the reflector (4) comprises a bottom portion (41) and four side portions (42) rising from four edges of the bottom portion (41).

The backlight module (1) is preferably a direct-type LED module and the light sources (3) are LEDs. The bottom plate (21) and the bottom portion (41) may have a rectangular or rectangular-like shape. The light sources (3) may be mounted directly on the back cover (2) or by means of an additional carrier, such as a carrier plate or bracket.

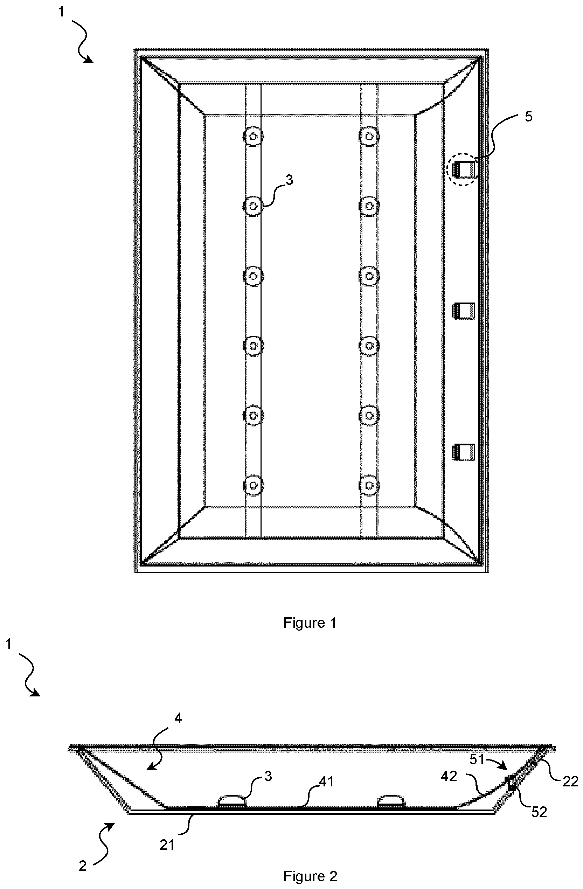

In the preferred embodiment the backlight module (1) further comprises a mounting structure (5) for fixing a side portion (42) to a corresponding sidewall (22), such that the side portion (42), when fixed to the sidewall (22) by means of the mounting structure (5), forms a curved reflecting surface. The curved surface rises from bottom portion (41) upwards to the upper edge of the side portion (42) and forms a concave reflection surface. A corresponding sidewall (22) for a side portion (42) is the sidewall (22) directly facing the side portion (42) when the reflector (4) is placed in the back cover (2). (Figure 1, Figure 2)

The mounting structure (5) is arranged to, when the side portion (42) is fixed to the sidewall (22), apply a force on a middle point of the side portion (42) towards the corresponding sidewall (22), giving the side portion (42) a curved shaped and maintaining it in that curved form. Middle point denotes a point or region between the edge of the bottom portion (41) from which a side portion (42) raises and the upper edge of said side portion (42). The middle point thus forms, in addition to contact regions at lower and upper edges of the side portion (42), an third point of mechanical connection between the side portion (42) and its corresponding sidewall (22). (Figure 2)

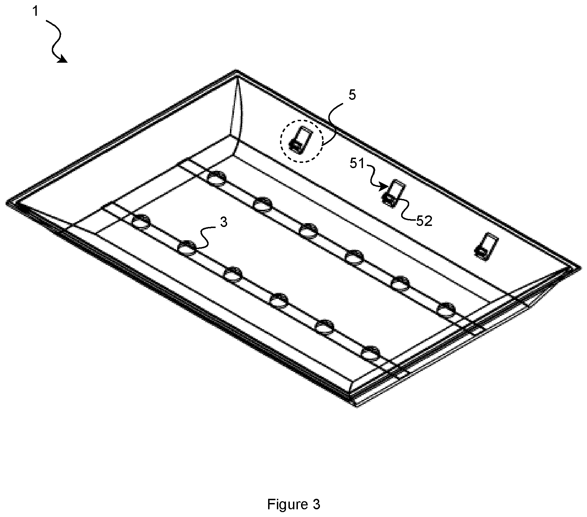

In embodiments, the mounting structure (5) comprises a first attachment means (51) on the side portion (42) and a second attachment means (52) for engaging with the first attachment means (51), disposed on the corresponding sidewall (22). (Figure 2, Figure 3) Preferably, the first attachment means (51) is integral to the side portion (42) and/or the second attachment means (52) is integral to the sidewall (22).

One of the first attachment means (51) and the second attachment means (52) may comprise an opening and the other may comprise a protrusion arranged to releasably engage with said opening. The opening may be in the form of a hole or recess and the protrusion may be in the form of a hook. Mutual engagement of attachment means (51, 52) can be realized by the protrusion firmly fitting, for example snap fitting, into the opening. According to an embodiment the first attachment means (51) comprises the opening and the second attachment means (52) comprises the protrusion.

In the figures, an embodiment where only one of the side portions (42) and the corresponding sidewall (22) provided with attachment means (51, 52) is shown. The first and second attachment means (51, 52) may also be provided on two, three, or all four side portions (42) and sidewalls (22) respectively. In an embodiment, each one of two opposite side portions (42) comprises at least one first attachment means (51), and each one of two corresponding opposite sidewalls (22) comprises at least one second attachment means (52). Said opposite side portions (42) and sidewalls (22) may be on the respective long edges of rectangular back cover (2) and reflector (4).

A side portion (42) may comprise a plurality of first attachment means (51), preferably arranged on a line parallel to the upper edge of said side portion (42). A corresponding sidewall (22) may comprise a plurality of second attachment means (52), preferably arranged on a line parallel to the upper edge of said sidewall (22).

According to an aspect of the invention, there is provided a display device comprising a backlight module (1) according to any one of the embodiments described above. The display device may be a television, for example a direct-type LED television comprising a display panel configured to display an image. The backlight module (1) is provided behind the display panel.

According to another aspect of the invention, there is provided a method of assembling the backlight module (1) or the display device according to any one of embodiments described above. The method comprises: aligning the reflector (4) with the back cover (2), and fixing a side portion (42) to a corresponding sidewall (22) by pressing a middle point of said side portion (42) towards said corresponding sidewall (22).

In embodiments where the mounting structure (5) comprises first attachment means (51) and second attachment means (52), aligning the reflector (4) may comprise positioning the reflector (4) in the back cover (2) such that corresponding first and second attachment means (51, 52) are brought against one another. Fixing a side portion (42) to a corresponding sidewall (22) comprises engaging first and second attachment means (51, 52), which gives the fixed side portion (42) a curved form.

The backlight module (1) of the present invention provides a simple and cost-effective solution for conveniently fixing a side portion (42) of a reflector (4) to a sidewall (22) of the back cover (2) in curved form. In this way, side portions (42) of a reflector (4) can concurrently be fixed to a corresponding sidewall (22) and be shaped into a stable curved form for enhanced uniformity of image brightness. With the invention, brightness uniformity can be increased 10-15% compared to use of reflecting plates with flat edge portions. Mechanical stability of the curved form is also improved, reducing mechanical deformation of the curved shape and deterioration of enhanced brightness uniformity during lifetime of the backlight module.

## Claims

1. A backlight module (1) for a display device, **comprising** a back cover (2) comprising a bottom plate (21) and four sidewalls (22); a plurality of light sources (3) mounted in the back cover (2); a reflector (4) disposed in the back cover (2), for reflecting light beams emitted from the light sources (3), wherein the reflector (4) comprises a bottom portion (41) and four side portions (42) rising from four edges of the bottom portion (41); **characterised in that** the backlight module (1) further comprises a mounting structure (5) for fixing a side portion (42) to a corresponding sidewall (22) such that the side portion (42), when fixed to the sidewall (22) by means of the mounting structure (5), forms a curved reflecting surface.

2. The backlight module (1) according to claim 1, wherein the mounting structure (5) is arranged to, when the side portion (42) is fixed to the sidewall (22), apply a force on a middle point of the side portion (42) towards the corresponding sidewall (22).

3. The backlight module (1) according to claim 1 or 2, wherein the mounting structure (5) comprises a first attachment means (51) on the side portion (42) and a second attachment means (52) for engaging with the first attachment means (51), disposed on the corresponding sidewall (22).

4. The backlight module (1) according to claim 3, wherein the first attachment means (51) is integral to the side portion (42).

5. The backlight module (1) according to claim 3 or 4, wherein the second attachment means (52) is integral to the sidewall (22).

6. The backlight module (1) according to any one of claims 3 to 5, wherein the first attachment means (51) comprises an opening and the second attachment means (52) comprises a protrusion arranged to releasably engage with said opening.

7. The backlight module (1) according to any one of claims 3 to 6, wherein each one of two opposite side portions (42) comprises at least one first attachment means (51), and each one of two corresponding opposite sidewalls (22) comprises at least one second attachment means (52).

8. The backlight module (1) according to any one of claims 3 to 7, wherein a side portion (42) comprises a plurality of first attachment means (51) arranged on a line parallel to the upper edge of said side portion (42) and a corresponding sidewall (22) comprises a plurality of second attachment means (52) arranged on a line parallel to the upper edge of said sidewall (22).

9. A display device comprising a backlight module (1) according to any one of preceding claims.

10. A method of assembling a backlight module (1) according to any one of claims 1 to 8, or a display device according to claim 9, wherein the method comprises:
aligning the reflector (4) with the back cover (2), and
fixing a side portion (42) to a corresponding sidewall (22) by pressing a middle point of said side portion (42) towards said corresponding sidewall (22).
